# EUROPEAN PATENT SPECIFICATION

(11) **EP 3 685 054 B1**
(45) Date of publication and mention of the grant of the patent: **17.07.2024**
(21) Application number: 18780230.1
(22) Date of filing: 06.09.2018
(51) Int. Cl.: F16B 12/44, F16B 35/00, A47B 13/02

(54) **JOINING SYSTEM BETWEEN A SUPPORTING PLANE AND A TUBULAR ELEMENT**
VERBINDUNGSSYSTEM ZWISCHEN EINER STÜTZEBENE UND EINEM ROHRFÖRMIGEN ELEMENT
SYSTÈME DE RÉUNION ENTRE UN PLAN DE SUPPORT ET UN ÉLÉMENT TUBULAIRE

(30) Priority: 21.09.2017 IT 201700105625
(43) Date of publication of application: 29.07.2020
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.R.L.
(86) International application number: PCT/IB2018/056793
(87) International publication number: WO 2019/058201

(56) References cited:
- EP-A1- 1 279 353
- EP-A1- 2 848 157
- DE-A1- 3 521 223
- DE-U1- 9 200 616

## Description

The present invention relates to a joining system between a supporting plane, for example a table top, and a tubular element, for example a leg for said table.

Various joining systems are known between a supporting plane and a tubular element consisting of a first male part and a second female part suitable for being intercoupled, and fixing means acting between said two male-female parts, so as to make the coupling stable.

A joining system of the type briefly described above is the object of patent EP1279353 which describes a joining system according to the preamble of claim 1.

The document DE 9200616 discloses a joining system, positioned between a top and each leg of a table, in which each of said table leg is provided with a ringshaped circumferential external groove and the table top is provided with a fastening ring with threaded pass through holes, in the radial direction, able to accommodate threaded pins.One of the requirements that must be satisfied by the above-mentioned joining systems is that the fixing means between the male and female parts must not only be easily accessible, but also concealed from sight, even in the presence of transparent supporting surfaces, such as glass or crystal tables.

The general objective of the present invention is therefore to satisfy said requirement of non-visibility of the fixing means, for example grub screws (headless screws), between said male and female parts forming the joining system.

This objective is achieved by an arrangement of a joining system as described in the enclosed claim 1 and sub-claims.

The structural and functional characteristics of the present invention, and its advantages with respect to the known art, can be clearly understood from the following description, referring to the enclosed drawings, which illustrate various embodiment examples of the invention itself.

In the drawings:
- figure 1 is an exploded vertical sectional view, taken according to the line I-I of figure 2, illustrating a first embodiment of a joining system according to the invention;
- figure 2 is a plan view from below of the joining system of figure 1;
- figure 3 is a vertical sectional view of the joining system of figure 1, assembled;
- figure 4 is an exploded vertical sectional view, taken according to the line IV-IV of figure 6, illustrating a second embodiment of a joining system according to the invention;
- figure 5 is an exploded perspective view of the joining system of figure 4;
- figure 6 is a plan view from below of the joining system of figure 4;
- figure 7 is a vertical sectional view of the joining system of figure 4, assembled;
- figures 8, 9 and 10 are exploded perspective views showing three different embodiments of the male part of the joining system according to the invention.

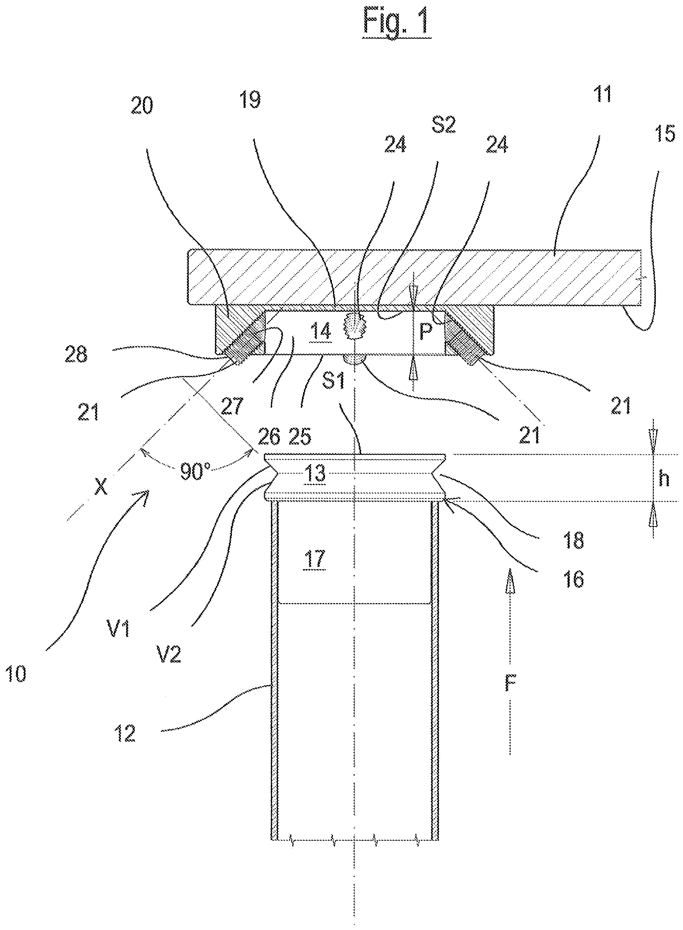

With reference first of all to figures 1-3 of the drawings, the joining system of the present invention is indicated as a whole with 10 and has the function of stably connecting a supporting plane 11, for example a table, to a tubular element 12, for example a cylindrical leg or other section of said table.

The joining system 10 consists of a male-female joint comprising a first male part 13 and a second female part 14.

The male part 13 is fixed at one end (top) of the tubular element 12, whereas the female part 14 is fixed below the plane 11, preferably, but not necessarily, directly against its lower surface 15.

The fixing of said male part 13 to the tubular element 12 and said female part to the surface 15 can be effected by any means suitable for the purpose, for example UV glues, or mechanical systems of the known type (expansion, screws, etc.).

According to the invention, said male part 13 consists, in the example of figures 1-3, of a discoidal plate 16, having an adequate thickness h, fixed to the top of the tubular element 12 by means of a shank 17. The plate 16 has a grooved annular edge 18, with a "V"-shaped section, as clearly illustrated in the drawings, thus having tilted surfaces V1 and V2.

The female part 14 consists of a base 19 fixed directly to the lower surface 15 of the plane 11 and is provided in an annular collar 20 having a suitable depth P, equal to the thickness h of the plate 16.

Characteristically, a plurality of grub screws 21 (headless screws) is housed in said collar 20, in the example illustrated four in number arranged at 90° with respect to each other.

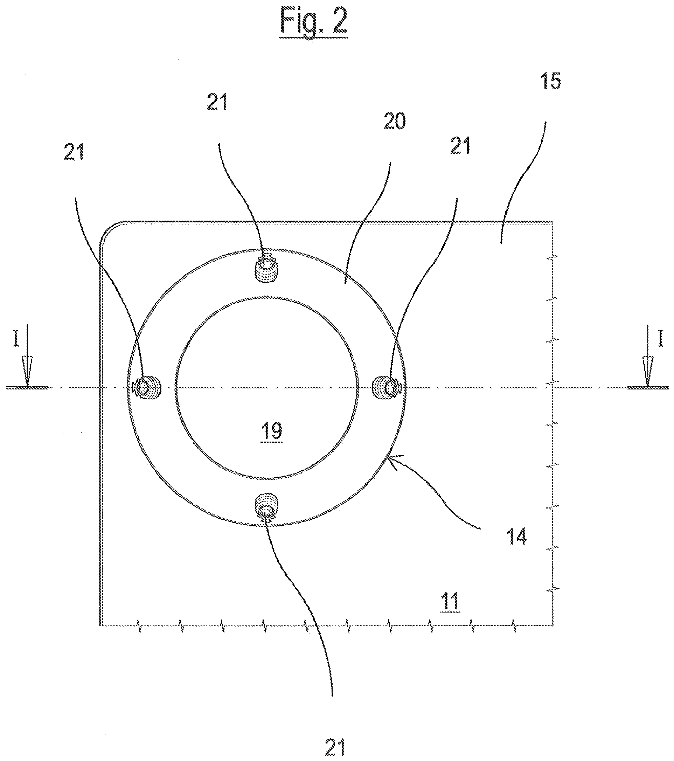

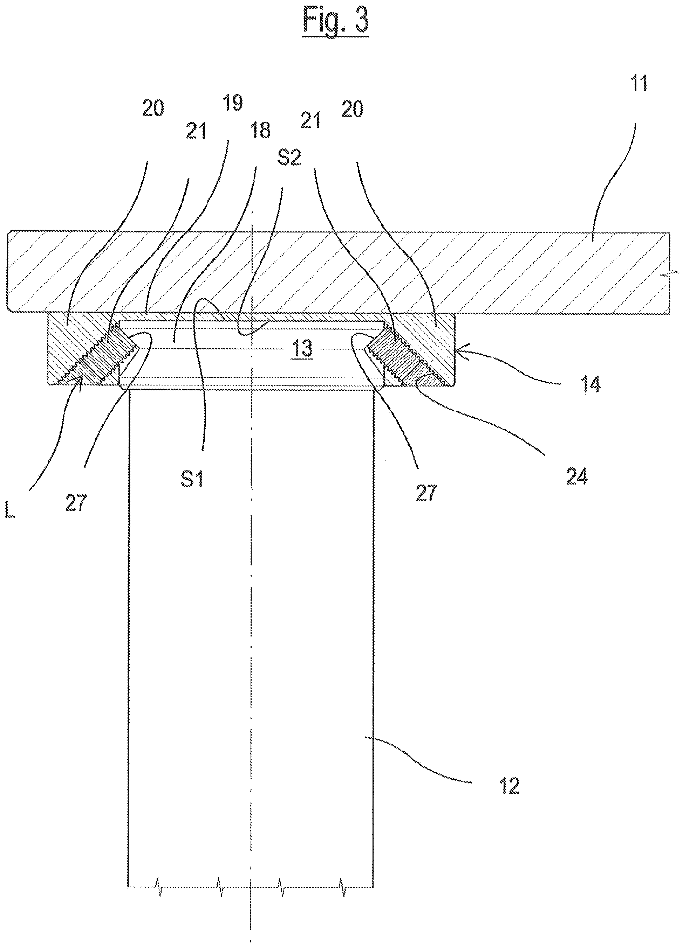

As can be clearly seen in figures 2 and 3 of the drawings, said grub screws 21 are each housed within a threaded pass-through hole 24, with an axis X tilted with respect to the plane 11.

The inclination of said axis X is such that the inlet of the hole 24 (outside the collar 20) is situated on the horizontal edge 25 of the collar 20 itself, parallel to the plane 11, whereas the outlet of said hole 24 is inside the collar 20, in correspondence with its vertical wall 26 perpendicular to the plane 11.

In other words, said grub screws 21 are contained inside the collar 20 and are tilted with respect to the plane 11 so as to have an actuation side L arranged beneath the collar 20 itself, in a position concealed from sight.

In the example illustrated, the axis X forms an angle of 90° with the upper surface V1 of the groove 18.

In this way the grub screws 21 are concealed from sight - above and from the side -, even in the presence of a transparent plane 11.

According to the actual needs, said angle can also be different from 90°.

The functioning of the joining system according to the invention is evident from what is described above with reference to the figures, and is briefly the following.

With the grub screws 21 in the position of figure 1, partially extracted from the horizontal edge 25 of the collar 20, the male part 13 is inserted, with movement in the direction of the arrow F, inside the complementary female part 14; the grub screws 21 are subsequently firmly screwed, by means of a screwdriver (not shown), with their flat tip 27, opposite the maneuvering head 28, inside the V-shaped groove 18 of the plate 16, so as to be abutted against the tilted surface V1 of the same groove 18, by pushing the outer upper end surface S1 of the male part 13 to be firmly abutted against the inner surface S2 of the base 19 of the female part 14.

In this way, the tubular element 12 is stably connected to the plane 11 with a joining system completely concealed from sight. The grub screws 21 are, in fact, invisible, even in the case of a transparent top 11, completely from above and from the side, whereas the inlet of the hole 24, easily accessible, can be covered by an aesthetic cap. Again for aesthetic purposes, the female part 14 can naturally also be made of materials with high-quality finishes.

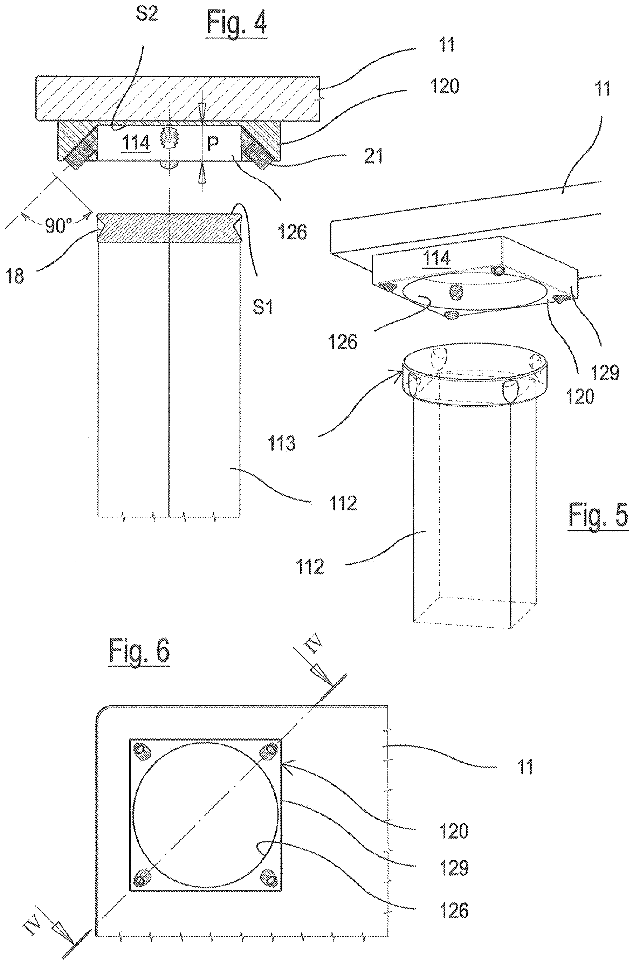

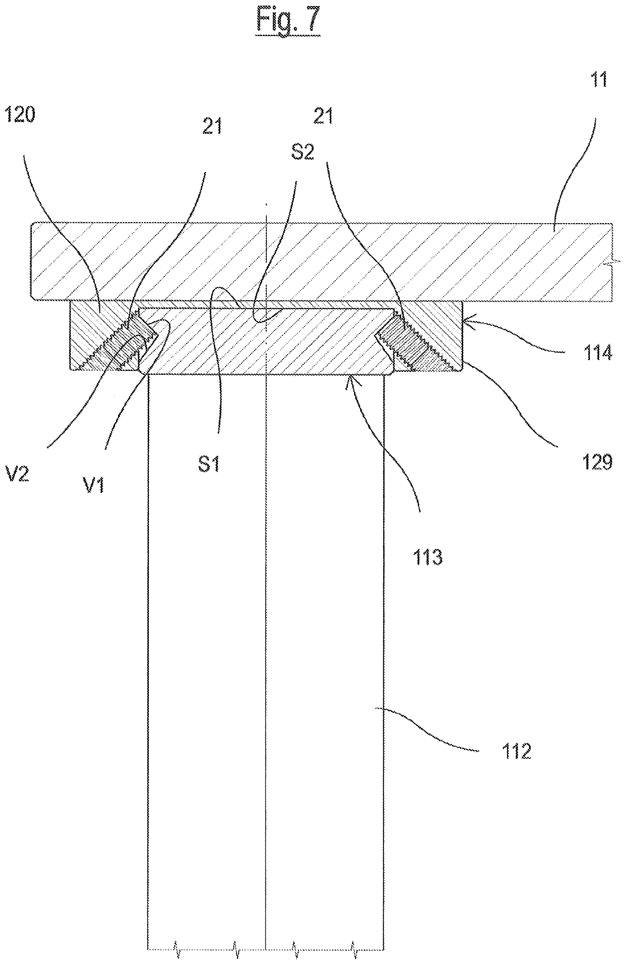

Figures 4-7 show a second possible embodiment of the joining system according to the invention, wherein the same components are indicated with the same reference numbers, whereas equivalent components have the same references increased by 100.

In this embodiment, a tubular element 112 is provided having a rectangular or square cross-section, together with a collar 120 with a vertical annular inner wall 126 and a square outer perimetric edge 129.

As can be clearly seen in Figure 6, four grub screws 21 are housed in said edge 129, arranged in correspondence with the vertices of the square.

The functioning of this embodiment is identical to that of the previous embodiment described with reference to Figures 1-3.

On screwing the grub screws 21, the flat end 27 of the same pushes against the complementary surface area V1 (corresponding) of the groove 18, thus defining the orientation of the tubular element 112 with respect to the female part 114 of the joint, and the surface S1 is tightened against the surface S2, thus making the coupling of the male part 113 and female part 114 stable, hence the coupling of the tubular element 112 with the plane 11.

Whereas in the case of tubular elements with a rectangular or square section (or others, for example triangular), for a correct automatic orientation between the components, the tip of the grub screws 21 must necessarily be flat, in the case of cylindrical tubular elements (with a circular section), the tip of the grub screws 21 can also be spherical.

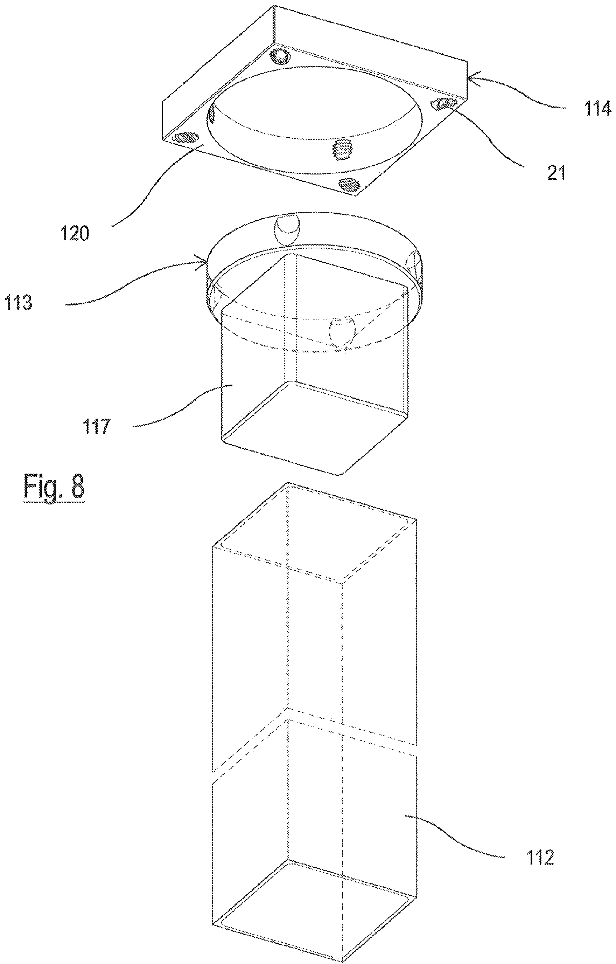

Figures 8-10 are exploded perspective views illustrating three non-limiting examples of fixing systems of the male part 113 to the top of the tubular element 112, said systems naturally also being valid for the cylindrical tubular element 12 previously described.

The embodiment of Figure 8 provides for the insertion of the shank 117 at the top of the tubular element 112 and a simple gluing, by means of adhesives of the type well known to skilled persons in the field, of the outer surface of the shank 117 to the inner surface of the tubular element 112.

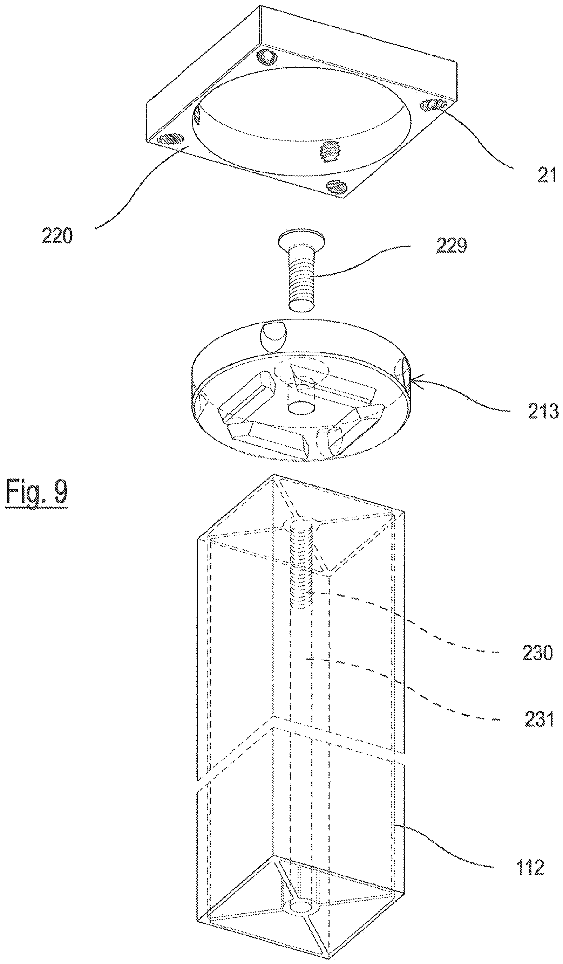

The embodiment of Figure 9 provides for the fixing of the male part 213 of the joint directly to the tubular element 212, without the aid of a shank.

As can be clearly seen from the drawing, in fact, the male part 213 is fixed to the top of the tubular element 212 by means of a screw 229, which is screwed into a threaded section 230 of a tube 231, which extends axially from the base to the top of the element 212 itself.

In this embodiment, the components substantially equivalent to those of the first embodiment have the same reference numbers increased by 200.

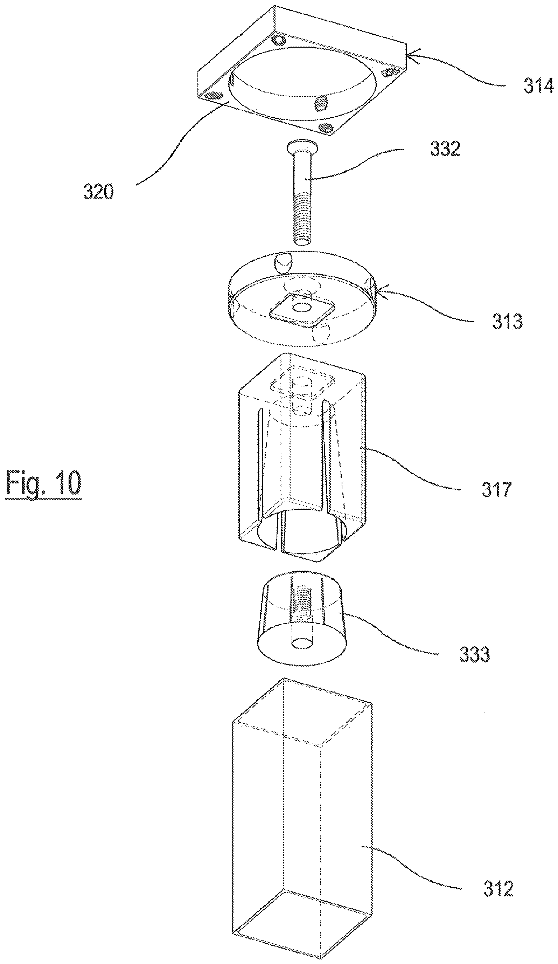

The embodiment of Figure 10 provides for the use of an expanding shank 317 clamped against the inner wall of the tubular element 312 by means of a maneuvering screw 332, which is screwed into an expanding element 333 which acts on the shank 317 expanding it radially outwardly, so as to tighten it firmly against the inner surface of the tubular element 312.

In this embodiment, the components substantially equivalent to those of the first embodiment have the same reference numbers increased by 300.

The objective mentioned in the preamble of the description has therefore been achieved.

The protection scope of the present invention is defined by the enclosed claims.

## Claims

1. Arrangement of a joining system between a supporting plane (11) and a tubular element (12, 112, 212, 312) of the type comprising, in combination: a first male part (13, 113, 213, 313) and a female part (14, 114, 214, 314) suitable for being intercoupled, and fixing means acting between said two male and female parts to make the junction between said plane and tubular element stable, wherein said female part (14, 114, 214, 314) is fixed beneath said supporting plane (11) and is provided with an annular collar (20,120,220,320) in which said fixing means are housed with an arrangement concealed from sight, said fixing means consist of grub screws or headless screws (21) and in that said grub screws or headless screws (21) are four in number, wherein said grub screws or headless screws (21) are contained inside the collar (20, 120,220,320) and are tilted with respect to the plane (11) so as to have an actuation side (L) arranged accessible from beneath the collar (20, 120,220,320) itself, in a position concealed from sight, and said male part (13, 113, 213, 313) consists of a discoidal plate (16) fixed to the top of the tubular element (12, 112, 212, 312) and provided with an annular edge (18) having a tilted surface (V1) against which said fixing means (21) are abutted.

2. The arrangement according to claim 1, **characterized in that** said collar (20, 120,220,320) is provided with a base (19) fixed directly to the lower surface (15) of said plane (11) and having an inner surface (S2) opposed to a surface (S1) of said male part (13, 113, 213, 313).

3. The arrangement according to claim 1, **characterized in that** said annular edge (18) has a V-shaped grooved section with surfaces V1 and V2 in which said fixing means (21) are engaged.

4. The arrangement according to claim 1, **characterized in that** said plate (16) has a thickness (h) equal to the depth (P) of said collar (20, 120,220,320).

5. The arrangement according to claim 1, **characterized in that** said grub screws (21) are each housed in a pass-through threaded hole (24), with a tilted axis (X) with respect to the plane (11), the inclination of said axis (X) being such that the inlet of the hole (24) outside the collar (20, 120,220,320) is situated on a horizontal edge (25) of the same collar (20, 120,220,320) parallel to the plane (11), whereas the outlet of said hole (24) is situated inside said collar (20, 120,220,320), in correspondence with one of its vertical walls (26) perpendicular to the plane (11), said grub screws (21) being contained inside the collar (20, 120,220,320).

6. The arrangement according to claim 5, **characterized in that** said axis (X) forms an angle of 90° with the upper surface (V1) of the groove (18).

7. The arrangement according to claim 5, **characterized in that** said grub screws (21) have a flat tip (27) opposite the maneuvering head (28), said flat tip (27) being suitable for being abutted and pushing against said tilted surface (V1) of the groove (18), an upper outer end surface (S1) of the male part (13,113,213,313) is thus firmly abutted against an inner surface (S2) of the female part (14,114,214,314).

8. The arrangement according to any of the previous claims, **characterized in that** said tubular element (12) is cylindrical.

9. The arrangement according to any of the previous claims, **characterized in that** said tubular element (112,212,312) has a square, rectangular, or triangular section.

## Patentansprüche

1. Anordnung eines Verbindungssystems zwischen einer Tragebene (11) und einem rohrförmigen Element (12, 112, 212, 312) des Typs, der in Kombination umfasst: einen ersten Steckteil (13, 113, 213, 313) und einen Buchsenteil (14, 114, 214, 314), die geeignet sind, miteinander gekoppelt zu werden, und Befestigungsmittel, die zwischen den beiden Steck- und Buchsenteilen wirken, um die Verbindung zwischen der Ebene und dem rohrförmigen Element stabil zu machen, wobei der Buchsenteil (14, 114, 214, 314) unter der Tragebene (11) befestigt ist und mit einem ringförmigen Kragen (20, 120, 220, 320) versehen ist, in dem die Befestigungsmittel mit einer Anordnung untergebracht sind, die vor dem Betrachten verborgen ist, wobei die Befestigungsmittel aus Madenschrauben oder kopflosen Schrauben (21) bestehen, und dadurch, dass die Anzahl der Madenschrauben oder kopflosen Schrauben (21) vier ist, wobei die Madenschrauben oder kopflosen Schrauben (21) innerhalb des Kragens (20, 120, 220, 320) enthalten sind und in Bezug auf die Ebene (11) geneigt sind, um eine Betätigungsseite (L) zu haben, die von unterhalb des Kragens (20, 120, 220, 320) selbst in einer Position, die vor dem Betrachten verborgen ist, zugänglich angeordnet ist, und der Steckteil (13, 113, 213, 313) aus einer scheibenförmigen Platte (16) besteht, die mit dem Oberteil des rohrförmigen Elements (12, 112, 212, 312) verbunden ist und mit einem ringförmigen Rand (18) versehen ist, der eine geneigte Fläche (V1) hat, gegen die die Befestigungsmittel (21) anliegen.

2. Anordnung nach Anspruch 1, **dadurch gekennzeichnet, dass** der Kragen (20, 120, 220, 320) mit einer Basis (19) versehen ist, die direkt an der unteren Fläche (15) der Ebene (11) befestigt ist und eine Innenfläche (S2) hat, die einer Fläche (S1) des Steckteils (13, 113, 213, 313) gegenüberliegt.

3. Anordnung nach Anspruch 1, **dadurch gekennzeichnet, dass** der ringförmige Rand (18) einen V-förmigen nutförmigen Abschnitt mit Flächen V1 und V2 hat, mit denen die Befestigungsmittel (21) in Eingriff stehen.

4. Anordnung nach Anspruch 1, **dadurch gekennzeichnet, dass** die Platte (16) eine Dicke (h) hat, die gleich der Tiefe (P) des Kragens (20, 120, 220, 320) ist.

5. Anordnung nach Anspruch 1, **dadurch gekennzeichnet, dass** die Madenschrauben (21) jeweils in einem durchgehenden Gewindeloch (24) mit einer geneigten Achse (X) in Bezug auf die Ebene (11) untergebracht sind, wobei die Neigung der Achse (X) derart ist, dass der Einlass des Lochs (24) außerhalb des Kragens (20, 120, 220, 320) an einem horizontalen Rand (25) desselben Kragens (20, 120, 220, 320) parallel zu der Ebene (11) angeordnet ist, während der Auslass des Lochs (24) innerhalb des Kragens (20, 120, 220, 320) in Übereinstimmung mit einer seiner vertikalen Wände (26) senkrecht zu der Ebene (11) angeordnet ist, wobei die Madenschrauben (21) innerhalb des Kragens (20, 120, 220, 320) enthalten sind.

6. Anordnung nach Anspruch 5, **dadurch gekennzeichnet, dass** die Achse (X) einen Winkel von 90° mit der oberen Fläche (V1) der Nut (18) bildet.

7. Anordnung nach Anspruch 5, **dadurch gekennzeichnet, dass** die Madenschrauben (21) eine flache Spitze (27) gegenüber dem Manövrierkopf (28) haben, wobei die flache Spitze (27) zum Anliegen an und Drücken gegen die geneigte Fläche (V1) der Nut (18) geeignet ist, wobei eine obere äußere Endfläche (S1) des Steckteils (13, 113, 213, 313) somit fest gegen eine Innenfläche (S2) des Buchsenteils (14, 114, 214, 314) anliegt.

8. Anordnung nach einem der vorhergehenden Ansprüche, **dadurch gekennzeichnet, dass** das rohrförmige Element (12) zylindrisch ist.

9. Anordnung nach einem der vorhergehenden Ansprüche, **dadurch gekennzeichnet, dass** das rohrförmige Element (112, 212, 312) einen quadratischen, rechteckigen oder dreieckigen Querschnitt hat.

## Revendications

1. Agencement d'un système de réunion entre un plan de support (11) et un élément tubulaire (12, 112, 212, 312) du type comprenant, en combinaison : une première partie mâle (13, 113, 213, 313) et une partie femelle (14, 114, 214, 314) aptes à être couplées entre elles, et des moyens de fixation agissant entre lesdites deux parties mâle et femelle pour rendre la réunion entre ledit plan et ledit élément tubulaire stable, dans lequel ladite partie femelle (14, 114, 214, 314) est fixée sous ledit plan de support (11) et est pourvue d'un collier annulaire (20,120,220,320) dans lequel lesdits moyens de fixation sont logés avec un agencement caché à la vue, lesdits moyens de fixation sont constitués de vis de retenue ou de vis sans tête (21) et en ce que lesdites vis de retenue ou vis sans tête (21) sont au nombre de quatre, dans lequel lesdites vis de retenue ou vis sans tête (21) sont contenues à l'intérieur du collier (20,120,220,320) et sont inclinées par rapport au plan (11) de manière à avoir un côté d'actionnement (L) agencé de façon accessible depuis le dessous du même collier (20,120,220,320), dans une position cachée à la vue, et ladite partie mâle (13, 113, 213, 313) est constituée d'une plaque discoïdale (16) fixée au sommet de l'élément tubulaire (12, 112, 212, 312) et pourvue d'un bord annulaire (18) ayant une surface inclinée (V1) contre laquelle lesdits moyens de fixation (21) viennent en butée.

2. Agencement selon la revendication 1, **caractérisé en ce que** ledit collier (20,120,220,320) est pourvu d'une base (19) fixée directement à la surface inférieure (15) dudit plan (11) et ayant une surface intérieure (S2) opposée à une surface (S1) de ladite partie mâle (13, 113, 213, 313).

3. Agencement selon la revendication 1, **caractérisé en ce que** ledit bord annulaire (18) a une section rainurée en forme de V avec des surfaces V1 et V2 dans lesquelles lesdits moyens de fixation (21) sont mis en prise.

4. Agencement selon la revendication 1, **caractérisé en ce que** ladite plaque (16) a une épaisseur (h) égale à la profondeur (P) dudit collier (20,120,220,320).

5. Agencement selon la revendication 1, **caractérisé en ce que** lesdites vis de retenue (21) sont chacune logées dans un trou fileté traversant (24), avec un axe incliné (X) par rapport au plan (11), l'inclinaison dudit axe (X) étant telle que l'entrée du trou (24) à l'extérieur du collier (20,120,220,320) est située sur un bord horizontal (25) du même collier (20,120,220,320) parallèle au plan (11), tandis que la sortie dudit trou (24) est située à l'intérieur dudit collier (20,120,220,320), en correspondance avec l'une de ses parois verticales (26) perpendiculaires au plan (11), lesdites vis de retenue (21) étant contenues à l'intérieur du collier (20,120,220,320).

6. Agencement selon la revendication 5, **caractérisé en ce que** ledit axe (X) forme un angle de 90° avec la surface supérieure (V1) de la rainure (18).

7. Agencement selon la revendication 5, **caractérisé en ce que** lesdites vis de retenue (21) ont une pointe plate (27) opposée à la tête de manœuvre (28), ladite pointe plate (27) étant apte à venir en butée et pousser contre ladite surface inclinée (V1) de la rainure (18), une surface d'extrémité extérieure supérieure (S1) de la partie mâle (13,113,213,313) vient ainsi fermement en butée contre une surface intérieure (S2) de la partie femelle (14,114,214,314).

8. Agencement selon l'une quelconque des revendications précédentes, **caractérisé en ce que** ledit élément tubulaire (12) est cylindrique.

9. Agencement selon l'une quelconque des revendications précédentes, **caractérisé en ce que** ledit élément tubulaire (112,212,312) a une section carrée, rectangulaire ou triangulaire.
